# EUROPÄISCHE PATENTSCHRIFT

(11) **EP 0 781 409 B1**
(45) Veröffentlichungstag und Bekanntmachung des Hinweises auf die Patenterteilung: **09.12.1998**
(21) Anmeldenummer: 95933353.5
(22) Anmeldetag: 08.09.1995
(51) Int. Cl.: G01N 27/12

(54) **CHEMISCHER SENSOR**
CHEMICAL SENSOR
CAPTEUR CHIMIQUE

(30) Priorität: 16.09.1994 DE 4433102
(43) Veröffentlichungstag der Anmeldung: 02.07.1997
(73) Patentinhaber: FRAUNHOFER-GESELLSCHAFT ZUR FÖRDERUNG DER ANGEWANDTEN FORSCHUNG E.V., 80636 München (DE)
(72) Erfinder: QU, W., Inst. für Halbleiter- & Mikrosystemtechnik, D-01062 Dresden-01062 Dresden (DE); MEYER, Jörg-Uwe, D-66386 St. Ingbert (DE)
(86) Internationale Anmeldenummer: EP9503547
(87) Internationale Veröffentlichungsnummer: WO9608713

(56) Entgegenhaltungen:
- DE-A- 2 901 519
- GB-A- 2 137 361
- US-A- 4 860 584

## Beschreibung

Die Erfindung betrifft einen chemischen Sensor.

### 1. Einleitung

Um für eine gesunde, komfortable Umgebung zu sorgen und die Sicherheit für Menschen und Geräte zu gewährleisten, wird der Einsatz von Klimaanlagen und Luftreinigern zur Verbesserung der Luftqualität in Räumen gefordert. Dabei ist der Einsatz einer als Rückkopplung in der automatischen Steuerung der Lüftungskanäle dienenden Sensorik zur kontinuierlichen Erfassung und Überwachung von Temperatur, Feuchte und gasförmigen Giftstoffen besonders wichtig.

Zur Bestimmung des Luftfeuchtigkeitsgehaltes und der Gaskonzentration stehen bereits Meßsysteme mit hohem technischen Niveau und Zuverlässigkeit zur Verfügung. Es seien erwähnt: Psychrometer oder Taupunktmeßgerät für die Ermittlung der Luftfeuchte, Gaschromatographie oder IR-Spektroskopie zur Bestimmung der Konzentration des Gases. Aus Gründen der Wirtschaftlichkeit, der Handhabung und insbesondere der technischen Komplexität, sind solche Laborgeräte jedoch für den Einsatz in Luftführungssystemen zur Raumüberwachung nicht geeignet. Um die Luftfeuchte und Gaskonzentration einfacher und kostengünstiger zu ermitteln, wurden verschiedene kompakte, keramische Sensorelemente aus halbleitenden Metalloxiden wie Al₂O₃, TiO₂-V₂O₅, MgAl₂O₄, MnWO₄, MgFe₂O₄, ZnCr₂O₄-LiZnVO₄ bzw. MgCr₂O₄-TiO₂ für Feuchte-Sensoren und SnO₂, ZnO, TiO₂, WO₃, Fe₂O₃, LaNiO₂, CoO bzw. PtO₂ für Gas-Sensoren entwickelt. Diese Sensoren finden trotz ihrer mehr oder weniger großen Nachteile in vielen praktischen Anwendungen Einsatz.

Hohe Empfindlichkeit, großer Meßbereich, kurze Ansprechzeiten und kleine Abmessungen sind u.a. die wichtigsten Anforderungen an ein Gas-Sensorelement. Diese Anforderungen hängen teils gleichsinnig zusammen, teils wirken sie aber auch einander entgegen. Dies macht die Entwicklung eines idealen Sensors besonders schwierig. Dieser Sensor ermöglicht eine optimale Nutzung der sensitiven Schicht.

### 2. Meßprinzip des Sensors

Als Meßeffekt für den Feuchte- und Gas-Sensor wird das Adsorptionsphänomen des Wasserdampfes bzw. der unterschiedlichen Gase an der Oberfläche des halbleitenden Metalloxides ausgenutzt, welches eine Änderung der physikalischen Eigenschaften des Metalloxides, vor allem die Oberflächenleitfähigkeit, bewirkt. Der bekannte SnO₂-Gas-Sensor basiert z.B. auf einem Phänomen, daß die Entfernung der an der SnO₂-Oberfläche absorbierten Sauerstoff-Ionen unter dem Einfluß von reduzierenden Gasen den elektrischen Widerstandswert des Sensors sinken läßt. Der Feuchte-Sensor basiert auf dem Prinzip, daß sich die Widerstände vieler Metalloxide logarithmisch mit zunehmendem Grad des Luftfeuchtegehaltes ändern. Durch Messung der elektrischen Widerstandsänderungen des Metalloxides unter dem Einfluß von Feuchtigkeit oder verschiedener Gase wird die Luftfeuchte bzw. die entsprechende Gaskonzentration ermittelt.

### 3. Nachteile der bisher in der Sensorik verwendeten Elektrodenanordnungen

Es ist bekannt, daß die Empfindlichkeit eines Sensors nicht nur vom sensitiven Material selbst, sondern auch vom Meßverfahren zur Bestimmung der Änderung der verwendeten Materialeigenschaften abhängig ist. Zur effektiven Ermittlung des Sensor-Signals spielt die Form der elektrischen Kontaktierung (Meßelektroden) eine wichtige Rolle. Nach Absorption von Wassermolekülen oder reduzierenden Gasen verringert sich der Widerstand des verwendeten Metalloxides. Zur Auswertung dieser Änderungen und damit zur Bestimmung des Feuchtegehaltes oder der Gaskonzentration in der Umgebung werden zur Zeit in der Dickschichttechnologie zwei Meßelektrodenanordnungen verwendet. Jede besitzt ihre Vor- und Nachteile.

### 3.1. Eigenschaften der Interdigital-Elektrode

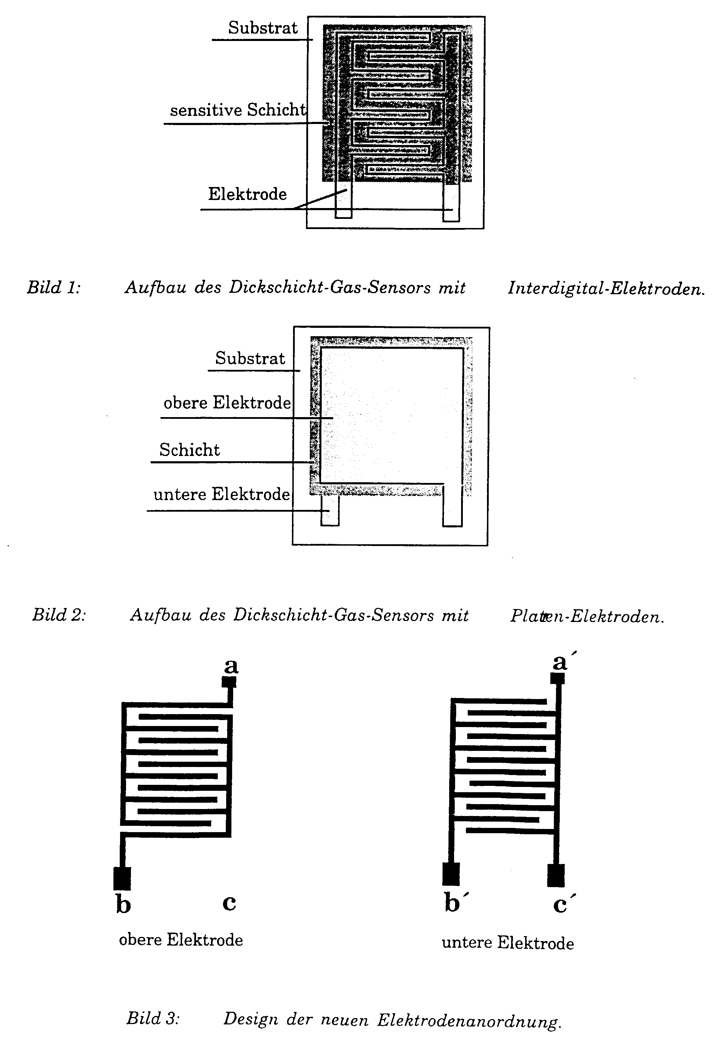

Bild 1 zeigt den Aufbau eines Sensors mit planaren Interdigitalelektroden, wie er z.B. aus O. Niwa et al / Anal. Chem. 62, 1990, 447 - 452, bekannt ist. Auf einem Al₂O₃-Substrat wird mittels Siebdruckverfahren zuerst die Interdigital-Elektrode gedruckt. Anschließend wird diese Struktur bei Raumtemperatur getrocknet und in einem Ofen bei hohen Temperaturen eingebrannt. Auf die bereits eingebrannte Elektrode wird dann die aus den sensitiven Metalloxiden bestehende Paste gedruckt und anschließend getrocknet bzw. eingebrannt.

Das als ebener interdigitaler Kondensator aufgebaute Sensorelement hat den Vorteil, daß die zu detektierende Komponente ohne Behinderungen direkt an die empfindliche Schicht gelangen kann, da sich die fingerförmige Elektrodenanordnung unter dieser aktiven Schicht befindet. Aus diesem Grund weist der Sensor eine kurze Ansprechzeit auf. Die Nachteile dieser Art der Messung des Sensorsignals liegen jedoch in dem hohen Innenwiderstand des Sensors begründet, wodurch die Empfindlichkeit herabgesetzt wird. Insbesondere im Bereich niedriger Wasserdampf- bzw. Gaskonzentration folgen die Änderungen des Sensorwiderstandes nicht empfindlich genug den Konzentrationsänderungen der zu detektierenden Komponente. Das Sensorelement wird daher überwiegend entweder in relativ hohen Konzentrationsbereichen verwendet oder in Fällen, wo nur ein schnelles Ansprechverhalten erforderlich ist.

In der US-A- 4860584 wird ein chemischer Sensor beschrieben mit einer ersten unteren Elektrode und einer zweiten oberen Elektrode und einer dazwischenliegenden gassensitiven Schicht als Feuchtesensor.
Als spezielles Ausführungsbeispiel wird in dieser Patentschrift (siehe Sp.78, Z.17, 18) erwähnt, daß die Elektroden eine interdigitale Struktur aufweisen können. Dieses Beispiel bezieht sich jedoch ganz offensichtlich auf eine koplanare Konfiguration der Elektroden. Zumindest ist nicht explizit erwähnt, daß zwei interdigitale Strukturen in paralleler Konfiguration vorgesehen sind.

### 3.2. Eigenschaften der Platten-Elektrode

Um die Sensor-Empfindlichkeit, insbesondere in niedrigen Wasserdampf- oder Gaskonzentrationen, zu verbessern, ist eine Verringerung des Sensor-Innenwiderstandes erforderlich. Dazu werden die Gas-Sensoren in Form einer "Sandwich"-Struktur aufgebaut. Bei dieser Bauweise sind die beiden Plattenelektroden parallel zueinander angeordnet und der Zwischenraum mit der aktiven Schicht aufgefüllt (Bild 2). In Dickschichttechnik wird das Sensorelement mittels Siebdruckverfahren auf ein Al₂O₃-Substrat in drei Druckvorgängen wie folgt aufgebaut: untere Plattenelektrode, Sensorschicht und obere Plattenelektrode. Nach dem Drucken jeder Schicht wird sie bei Raumtemperatur getrocknet und anschließend bei hohen Temperaturen eingebrannt.

Durch diese Bauweise besitzt der Gas-Sensor einen niedrigen Innenwiderstand und kann deshalb selbst in geringen Wasserdampf- oder Gaskonzentrationen eine hohe Empfindlichkeit erreichen, da der mit zwei großen Plattenelektroden über eine sehr dünne aktive Schicht mißt. Aufgrund der technologischen Gegebenheiten lassen sich im Dickschichtverfahren trotz hochmeschzahliger Siebe jedoch nur Elektroden mit Schichtdicken größer µm herstellen. Da die Wasser- bzw. Gasmoleküle zuerst durch die dicke, ganzflächige Deckelektrode zur aktiven Schicht gelangen müssen, besitzt das Sensorelement eine lange Ansprechzeit.

Aufgabe der Erfindung ist es, einen chemischen Sensor zu schaffen, der eine hohe Konzentrationsempfindlichkeit und eine kurze Ansprechzeit besitzt.

Erfindungsgemäß wird dies durch den Sensor nach Anspruch 1 erreicht. Vorteilhafte Ausgestaltungen des Sensors sind in den Unteransprüchen gekennzeichnet.

### 4. Vorteile der neuen "interdigitalen Sandwich"-Elektrodenanordnung

Dadurch wird neben einer Erhöhung der Sensorempfindlichkeit die Abmessung des Sensorelementes verkleinert, die Ansprechzeit verkürzt und ein großer Meßbereich gewährleistet.

Die neue Elektrodenanordnung zur Kontaktierung des Gas-Sensors kombiniert den Vorteil von Interdigital-Elektroden und Platten-Elektroden. Dadurch wird erreicht, daß der Gas-Sensor auch bei niedriger Konzentration der zu detektierenden Komponente eine hohe Empfindlichkeit aufweist, der Sensor über einen großen Meßbereich verfügt und sich auch seine Ansprechzeit verkürzt.

Der Aufbau des neuen Gas-Sensors hat eine "Sandwich"-Konfiguration. Das Besondere daran ist jedoch, daß die "Platten" ihrem Aufbau nach jeweils einer interdigitalen Struktur entsprechen und die Spannungspolarität der gegenüberstehenden Fingerstrukturen absichtlich umgekehrt wurde. Bei dieser Bauweise ist jede Elektrode für sich gesehen ein interdigitaler Kondensator, wobei zwischen der oberen und der unteren Elektrode durch die umgekehrte Spannungspolarität der beiden Elektroden wiederum ein Plattenkondensator entsteht.

Bild 3 zeigt das Design der beiden Elektroden. Durch die Siebdruckprozesse würden die beiden Elektroden genau übereinander liegen, wodurch es zu einem elektrischen Kurzschluß zwischen den beiden Elektroden an der nicht von der aktiven Schicht isolierten Stelle kommen kann. Daher sind die Punkte a und a' sowie b und b' zusammengeschaltet und liegen somit auf gleichem Potential, wodurch die benötigte, umgekehrte Spannungspolarität erreicht wird.

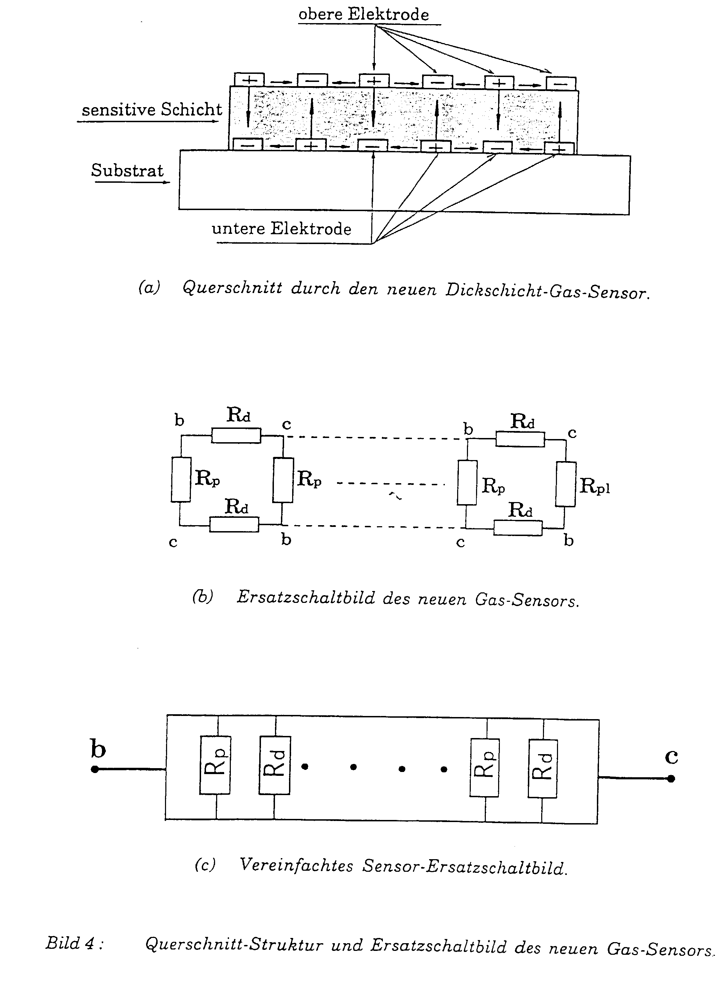

Im Querschnitt ergibt sich die in Bild 4a dargestellte Struktur. Sie stellt einen dreidimensionalen Kondensator dar. Die beiden Elektroden sind sowohl gegeneinander parallel als auch selbst interdigital kapazitiv gekoppelt. Das Design der "interdigitalen Sandwich"-Elektrodenanordnung ermöglicht eine optimale Nutzung der sensitiven Schicht, was gleichzeitig eine Verkleinerung der Abmessung des Sensorelementes ermöglicht. Jeder einzelne Elektrodenfinger bildet mit seinen Nachbarfingern entweder einen Plattenkondensator oder einen Interdigitalkondensator. Die elektrischen Änderungen in der aktiven Schicht werden dadurch in den parallel zusammengeschalteten Interdigital- und Plattenkondensatoren effektiver ausgewertet. Der gesamte Sensor-Widerstand R_{bc} wird durch folgende Gleichung beschrieben (siehe auch Bild 4b und 4c):
Rₚ = Widerstand, der durch das sensitive Schicht getrennten Finger im Raum;
R_{d} = Widerstand zwischen den Fingern in der Ebene;
n = Anzahl der Finger.

Durch das veränderte Design der Elektroden konnte eine Verringerung des Sensor-Innenwiderstandes erreicht werden. Aus diesem Grund besitzt der Sensor auch bei geringen Konzentrationen der zu detektierenden Komponente eine hohe Empfindlichkeit. Die nicht ganz geschlossene obere Interdigital-Elektrode läßt die Wasser- bzw. Gasmoleküle direkt an die aktive Schicht gelangen, wodurch sich auch seine Ansprechzeit verkürzt. Die Vorteile der Interdigital-Elektroden und der Platten-Elektroden wurden in dieser Elektrodenanordnung vereint.

Tabelle 1 stellt die in Versuchsreihen ermittelten Innenwiderstände und die dazugehörigen Ansprechzeiten im Vergleich der drei unterschiedlichen Elektrodenanordnungen dar. Zu dieser Messung wurden Dickschicht-Feuchte-Sensoren mit 40 pm dicken polykristallinen MnWO₄-Schichten, aber mit verschiedenen Elektrodenanordnungen benutzt. Der Vorteil der neu entwickelten Elektrodenanordnung wird durch die Ergebnisse in dieser Tabelle verdeutlicht.

### 5. Technischer Einsatz und Druckprozeß

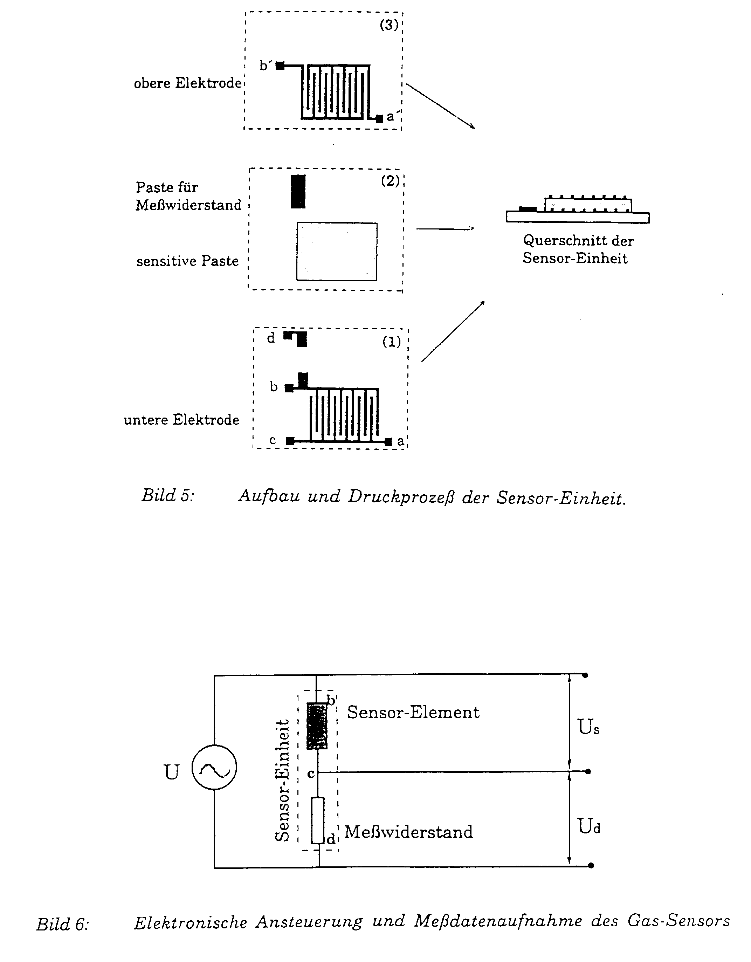

Zur Ergänzung des Sensorelementes wird ein Meßwiderstand zu den Sensor-Elektroden dazugedruckt (siehe Bild 5). Dadurch entsteht eine Sensor-Einheit. Die Unterelektroden dienen sowohl als Sensor-Elektroden als auch als Kontaktlager für den Meßwiderstand.

Die Vorgehensweise bei der Herstellung des Sensors gestaltet sich wie folgt:
1. Auf ein Al₂O₃-Substrat wird die Unterelektrode aus Platin- oder Goldpaste gedruckt. der Druck wird getrocknet und eingebrannt.
2. Auf die bereits eingebrannte Unterelektrode wird dann die sensitive Paste gedruckt. Nach dem Trocknen der gedruckten Sensor-Paste wird der Vorgang noch einmal wiederholt. Auf diese Weise erhöht man die gewünschte Schichtdicke und es entsteht eine geschlossene Oberfläche. Wenn auch die zweite Pastenschicht getrocknet ist, wird die Paste für den Meßwiderstand aufgedruckt und getrocknet.
3. Auf den Sensor wird zum Abschluß die Oberelektrode gedruckt. Ist die Paste der oberen Elektrode getrocknet, werden die beiden zuletzt gedruckten Pasten zusammen (Co-Firing) eingebrannt.

Diese Sensor-Einheit vereinfacht die Auswertung des Sensor-Signals, es ist nur eine externe Spannung erforderlich. Die Meßschaltung ist in Bild 6 dargestellt. Die an dem Meßwiderstand abfallende Spannung wird als Sensor-Signal ausgewertet.

### 6. Einsatzgebiete

Überall dort, wo Dickschicht-Gas-Sensoren eingesetzt werden, von denen neben einer hohen Empfindlichkeit auch eine schnelle Ansprechzeit gefordert wird:
- Raumluftüberwachung,
- Klimaanlage,
- Luftreiniger,
- Gewächshäusern.

### 7. Bevorzugtes Ausführungsbeispiel

Der chemische Sensor wird nach 5.1 hergestellt, wobei als sensitive Schicht polykristallines MnWO₄ verwendet wird. Nach dem Trocknen und Einbrennen hat die sensitive Schicht eine Dicke von 40 µm. Die Breite beträgt ca. 100 - 300 µm.

Die Elektroden bestehen aus einer Platin- oder Goldverbindung.

## Patentansprüche

1. Chemischer Sensor mit einer ersten unteren Elektrode mit einer interdigitalen Struktur und einer zweiten oberen Elektrode mit einer interdigitalen Struktur und einer dazwischenliegenden gassensitiven Schicht als Feuchte- oder Gassensor und wobei die Elektrodenanschlüsse a, a' und b, b' übereinander liegen, die Interdigitalstruktur bzw. -Finger so angeordnet sind, daß die übereinanderliegenden Fingerstrukturen eine umgekehrte (+, -) Spannungspolarität aufweisen.

2. Sensor nach Anspruch 1,
**dadurch gekennzeichnet**,
daß zusätzlich ein Meßwiderstand vorgesehen ist, der zu dem Sensorelement, d.h. den Elektroden mit dazwischenliegender gassensitiver Schicht, derart geschaltet ist, daß die am Meßwiderstand abfallende Spannung als Sensorsignal auswertbar ist.

3. Sensor nach den Ansprüchen 1 - 2,
**dadurch gekennzeichnet**,
daß die Elektroden aus Platin- oder Goldpaste auf Al₂O₃ bzw. der gas-sensitiven Schicht gedruckt und eingebrannt sind.

## Claims

1. A chemical sensor with a first, lower electrode with an interdigital structure and a second, upper electrode with an interdigital structure and a gas-sensitive layer lying therebetween as a moisture or gas sensor and wherein the electrode terminals a, a' and b. b' lie over one another and the interdigital structures or fingers are so arranged that the finger structures overlying one another have opposite (+, -) voltage polarities.

2. A sensor according to claim 1, characterized in that a measuring resistance is also provided and is so connected to the sensor element, i.e. the electrodes with a gas-sensitive layer lying therebetween that the potential drop across the measuring resistance can be evaluated.

3. A sensor according to claims 1 - 2, characterized in that the electrodes are printed and fired platinum or gold paste on Al₂O₃ or the gas-sensitive layer.

## Revendications

1. Capteur chimique avec une première électrode inférieure à structure interdigitée et une deuxième électrode supérieure à structure interdigitée et entre elles une couche sensible aux gaz comme capteur d'humidité ou de gaz et où les connexions d'électrodes (a, a' et b, b') sont superposées, la structure interdigitée ou la structure des doigts est disposée de telle façon que les structures de doigts superposées présentent une polarité de tension inverse (+, -).

2. Capteur selon la revendication 1,
caractérisé en ce qu'
on prévoit en plus une résistance de mesure qui est branchée à l'élément de capteur, c'est-à-dire aux électrodes qui comprennent entre elles la couche sensible aux gaz, de sorte qu'on peut exploiter la chute de tension à la résistance de mesure comme signal de capteur.

3. Capteur selon les revendications 1 - 2,
caractérisé en ce que
les électrodes en pâte de platine ou d'or sont imprimées sur Al₂O₃, respectivement la couche sensible au gaz est imprimée puis on les cuit.
